# EUROPEAN PATENT APPLICATION

(11) **EP 4 606 624 A1**
(43) Date of publication of application: **27.08.2025**
(21) Application number: 25157823.3
(22) Date of filing: 13.02.2025
(51) Int. Cl.: B60L 15/20

(54) **ELECTRIC VEHICLE**

(30) Priority: 21.02.2024 JP 2024024728
(71) Applicant: TOYOTA JIDOSHA KABUSHIKI KAISHA, Toyota-shi, Aichi-Ken, 471-8571 (JP)
(72) Inventor: ISAMI, Yoichiro, TOYOTA-SHI, AICHI-KEN, 471-8571 (JP); YAMANAKA, Satoshi, TOYOTA-SHI, AICHI-KEN, 471-8571 (JP); SHIINA, Takahiro, TOYOTA-SHI, AICHI-KEN, 471-8571 (JP)
(74) Representative: Cabinet Beau de Loménie

(57) **Abstract**

An electric vehicle (100) has an electric motor (4F, 4R) as a driving source and includes a control device (101), a first indicator, a second indicator, and a third indicator. The control device (101) switches a relationship among base torque, an operation amount of the first indicator, and a vehicle speed of the electric vehicle (100), in a plurality of predetermined relationships in accordance with operation of the second indicator, decreases the torque of the electric motor (4F, 4R) from the base torque in response to a direction from the third indicator, and accepts input from the second indicator only when an operation amount of the third indicator is larger than a predetermined amount.

## Description

### Field

The present disclosure relates to an electric vehicle having an electric motor as a drive source.

### Background Art

Patent Literature 1 discloses an electric vehicle which can simulate a behavior of a vehicle including a manual transmission and using an engine as a power source (transmission vehicle) by controlling an electric motor. The electric vehicle has an MT traveling mode (MT mode) for reproducing the behavior of the transmission vehicle in addition to an EV traveling mode (EV mode) for performing normal traveling of the electric vehicle. The driver can switch between the MT mode and the EV mode by a switch or the like. In the MT mode, shift positions of the transmission vehicle are also virtually reproduced, and the driver can perform gear shift operation by his / her own hands as if he / she drives the transmission vehicle.

### List of Related Art

Patent Literature 1: Japanese Patent No. 6787507

### SUMMARY

According to the above-described conventional technique, the driver can experience operation of the transmission vehicle by the electric vehicle. In such an electric vehicle, it is considered to achieve both operation feeling closer to that of the transmission vehicle and ease of operation.

An object of the present disclosure is to provide an electric vehicle capable of reproducing a behavior of a transmission vehicle, in which the driver can experience operational feeling similar to that of a transmission vehicle while maintaining ease of operation.

The present disclosure provides an electric vehicle having an electric motor as a driving source. The electric vehicle includes a control device configured to control the electric motor, a first indicator that gives a continuous direction to the control device in accordance with a first operation amount of the first indicator, a second indicator that gives a relative direction to the control device for each operation of the second indicator, and a third indicator that gives a continuous or discrete direction to the control device in accordance with a third operation amount of the third indicator. The control device is configured to execute switching a relationship among base torque, the first operation amount, and a vehicle speed of the electric vehicle, in a plurality of predetermined relationships in accordance with operation of the second indicator, the base torque being torque of the electric motor in a state where the third indicator is not operated, decreasing the torque of the electric motor from the base torque in response to a direction from the third indicator, and accepting input from the second indicator only when the third operation amount is larger than a predetermined amount.

According to the electric vehicle of the present disclosure, input from the second indicator is accepted only when the operation amount of the third indicator is larger than the predetermined amount. The third indicator, which outputs the continuous or discrete direction according to the operation amount, corresponds to a clutch pedal in a transmission vehicle. The second indicator, which outputs the relative direction for each operation, corresponds to a sequential shifter in the transmission vehicle. That is, in the electric vehicle of the present disclosure, it is necessary to operate a device corresponding to the clutch pedal in order to perform operation simulating gear shift operation of the transmission vehicle. This makes it possible to bring the operational feeling closer to that of the transmission vehicle.

### BRIEF DESCRIPTION OF THE DRAWINGS

Fig. 1 is a diagram showing a configuration of an electric vehicle according to an embodiment of the present disclosure.
Fig. 2a is a diagram showing an example of a relative direction type shift device.
Fig. 2b is a diagram showing an example of a relative direction type shift device.
Fig. 3 is a diagram showing another example of the relative indication type shift device.
Fig. 4a is a diagram showing still another example of the relative indication type shift device.
Fig. 4b is a diagram showing still another example of the relative indication type shift device.
Fig. 5a is a diagram showing still another example of the relative indication type shift device.
Fig. 5b is a diagram showing still another example of the relative indication type shift device.
Fig. 6 is a diagram showing a configuration of a control device related to travel control of the electric vehicle.
Fig. 7 is a time chart showing an example of operation when upshift is performed.
Fig. 8 is a time chart showing an example of operation when downshift is performed.

### DETAILED DESCRIPTION

Embodiments of the present disclosure will be described with reference to the accompanying drawings.

### 1. Configuration of Power System of Electric Vehicle

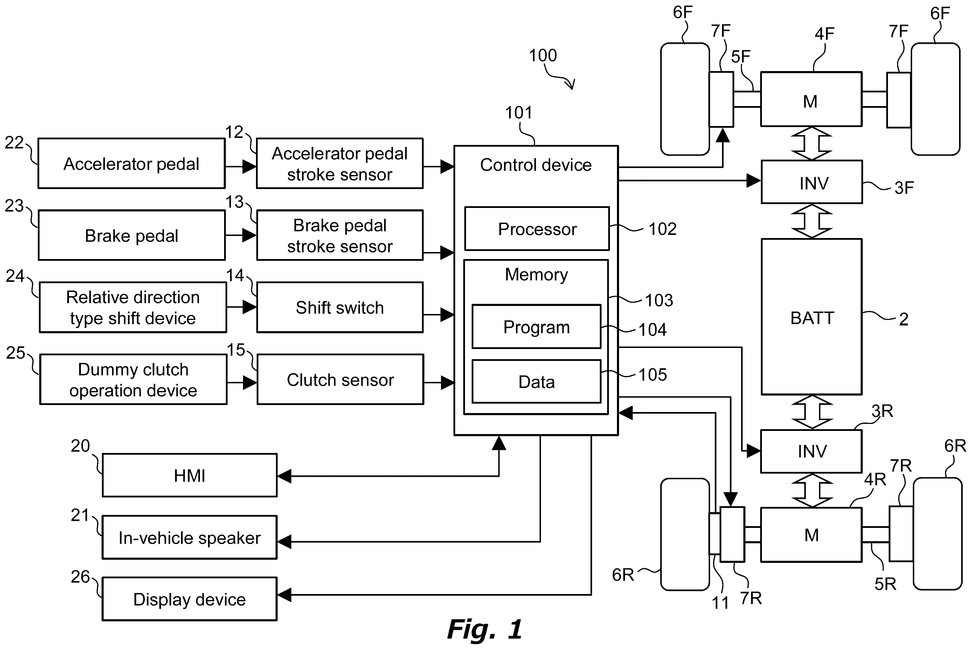

Fig. 1 is a diagram schematically showing a configuration of an electric vehicle 100 according to an embodiment of the present disclosure. First, a configuration of a power system of the electric vehicle 100 will be described with reference to Fig. 1.

The electric vehicle 100 includes two electric motors (M) 4F and 4R as power sources for driving. The electric motors 4F and 4R are arranged at the front and the rear, respectively. The electric motors 4F and 4R are, for example, three phase alternating current motors. The front electric motor 4F is connected to a front drive shaft 6F, which drives front wheels 5F. The rear electric motor 4R is connected to a rear drive shaft 6R, which drives rear wheels 5R. The front wheels 6F are suspended by front suspension 7F, in which the right and left can be controlled independently and electronically. The rear wheels 6R are suspended by rear suspension 7R, in which the right and left can be controlled independently and electronically.

Inverters (INV) 4F and 4R are attached to the front electric motor 3F and the rear electric motor 3R, respectively. The front inverter 3F and the rear inverter 3R are connected to a battery (BATT) 2. The battery 2 stores electric energy for driving the electric motors 4F and 4R. That is, the electric vehicle 100 is a battery electric vehicle (BEV) which travels with electric energy stored in the battery 2. The inverters 3F and 3R are, for example, voltage-type inverters and control torque of the electric motors 4F and 4R by PWM control.

### 2. Configuration of Control System of Electric Vehicle

Next, a configuration of a control system of the electric vehicle 100 will be described with reference to Figs. 1 to 5.

The electric vehicle 100 includes a vehicle speed sensor 11. At least one of wheel speed sensors (not shown the figure) installed at the right and left front wheels 6F and the right and left rear wheels 6R is used as the vehicle speed sensor 11. The electric vehicle 100 includes an accelerator pedal stroke sensor 12. The accelerator pedal stroke sensor 12 is installed at an accelerator pedal 22 and outputs a signal indicating an accelerator position, that is, an amount of operation of the accelerator pedal 22. The accelerator pedal 22 is continuously operated by the driver, and the signal indicating the accelerator position is continuously transmitted to the control device 101 while the electric vehicle 100 is traveling. The accelerator pedal 22 is a pedal-type device operated by a foot, but a device for accelerator operation may be a device operated by a hand. For example, the electric vehicle 100 may include a lever type accelerator operation device or a dial type accelerator operation device operated by a hand instead of the accelerator pedal 22.

The electric vehicle 100 further includes a brake pedal stroke sensor 13. The brake pedal stroke sensor 13 is installed at a brake pedal 23 and outputs a signal indicating a break position, that is, an amount of operation of the brake pedal 23. The brake pedal 23 is continuously operated by the driver, and the signal indicating the breake position is continuously transmitted to the control device 101 while the electric vehicle 100 is traveling.

The accelerator pedal 22 and the brake pedal 23 are driving operation members, which are used for driving the electric vehicle 100. In addition to these driving operation members, the electric vehicle 100 includes a gear shift operation member for performing a virtual gear shift operation simulating gear shift operation of a transmission vehicle. The gear shift operation members include a relative direction type shift device 24 and a dummy clutch operation device 25 described below.

The relative direction type shift device 24 is a device for the driver to perform gear shift operation. The driver can relatively direct a shift position (gear stage), in other words, can select the shift position based on a current shift position, by operating the relative direction type shift device 24. The driver can sequentially shift up or shift down the shift position one stage at a time in order using the relative direction type shift device 24. For example, the driver can switch the shift position in order of the 1st, 2nd, 3rd, and so on by using the relative direction type shift device 24. The driver selects the shift position to be directed by sequentially switching the shift positions. However, since the electric vehicle 100 does not include an actual transmission, the shift position directed by the relative direction type shift device 24 is a virtual shift position.

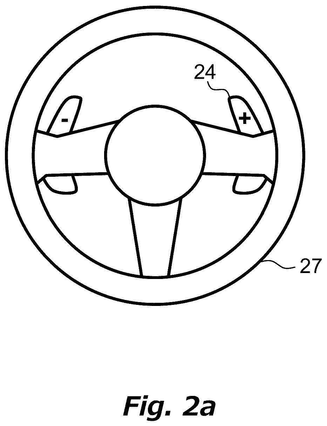

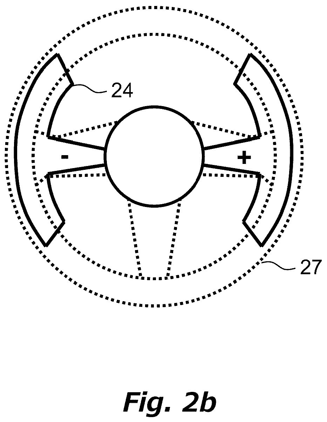

The relative direction type shift device 24 may be any device as long as the driver can relatively direct the shift position, and the structure thereof is not particularly limited. An example of the relative direction type shift device 24 is shown in Figs. 2 to 5.

As an example of the relative direction type shift device 24, each of Figs. 2a and 2b show a dummy paddle shifter 24 simulating a paddle shifter which is a kind of sequential shifter. The dummy paddle shifter 24 is a dummy different from an original paddle shifter. The dummy paddle shifter 24 has a structure similar to a shift paddle attached to a steering wheel 27 or a steering column and includes right and left paddles which can be moved independently. The dummy paddle shifter 24 may be attached to a steering wheel or may be attached to a steering column. Fig. 2a shows a dummy paddle shifter simulating a paddle shifter attached to the steering wheel, and Fig. 2b shows a dummy paddle shifter simulating a paddle shifter attached to the steering column. A shift switch 14 is inastalled at the dummy paddle shifter 24. The shift switch 14 outputs an upshift signal when the right paddle is pulled, and outputs a downshift signal when the left paddle is pulled.

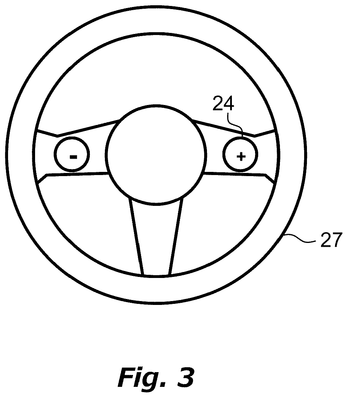

Fig. 3 shows a button type device installed at the steering wheel 27 as another example of the relative direction type shift device 24. The shift switch 14 is also installed at the button type relative direction type shift device 24. The shift switch 14 outputs the upshift signal when the right button is pressed and outputs the downshift signal when the left button is pressed. The button type relative direction type shift device 24 may be attached to a place other than the steering wheel. For example, a button installed on a center console may be used as the relative direction type shift device 24.

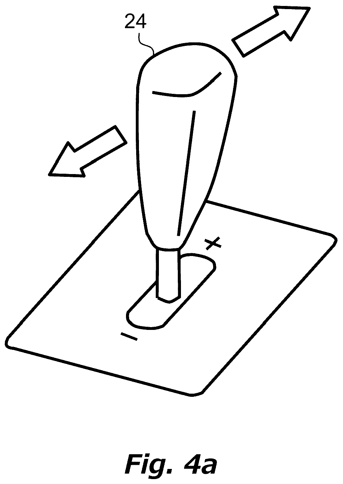

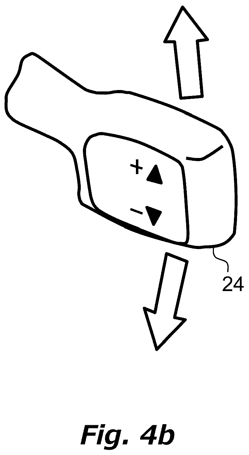

As still another example of the relative direction type shift device 24, each of Figs. 4a and 4b shows a dummy shift lever 24 simulating a shift lever which is a kind of sequential shifter. The dummy shift lever 24 is a dummy different from the original shift lever. Fig. 4a shows an example of the dummy shift lever 24 installed on the center console, and Fig. 4b shows an example of the dummy shift lever 24 installed at the steering column. The shift switch 14 is also installed in the dummy shift lever 24. The shift switch 14 outputs the upshift signal when the shift lever is moved forward or toward the upper side, and outputs the downshift signal when the shift lever is moved backward or toward the lower side. The dummy shift lever 24 may be installed at a place other than the center console and the steering column.

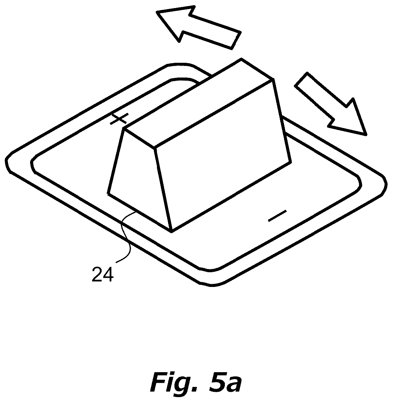

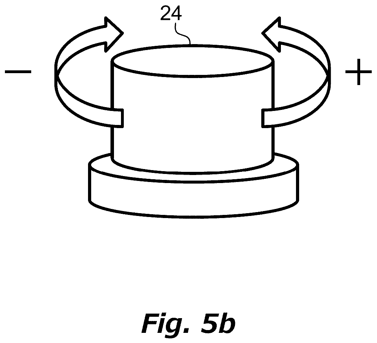

Each of Figs. 5a and 5b shows a still another example of the relative direction type shift device 24. For example, the relative direction type shift device 24 may be a toggle switch as shown in Fig. 5a. When the driver tilts a knob forrward, the switch outputs the upshift signal, and when the driver tilts the knob backward, the switch outputs the downshift signal. Alternatively, the relative direction type shift device 24 may be a rotary switch as shown in Fig. 5b. When the driver turns a knob to the right, the switch outputs the upshift signal, and when the driver turns the knob to the left, the switch outputs the downshift signal. These switches may be installed at any place in the electric vehicle 100 as long as the driver can operate the switche from the driver's seat.

As still another example, the relative direction type shift device 24 may be a touch panel type device. That is, a screen for selecting upshift or downshift may be displayed on a touch panel.

Operation of the relative direction type shift device 24 performed by the driver as exemplified above is a discrete operation, and the relative direction type shift device 24 (shift switch 14) discretely outputs a signal indicating upshift or downshift each time the operation is performed by the driver.

Reference is made again to Fig. 1. A dummy clutch operation device 25 is a device for reproducing clutch operation in the transmission vehicle. An example of the dummy clutch operation device 25 is a dummy clutch pedal, which simulates a clutch pedal of the transmission vehicle. The dummy clutch pedal is a dummy different from an original clutch pedal. The dummy clutch pedal has a structure similar to the clutch pedal installed in the conventional transmission vehicle. For example, the dummy clutch pedal includes a reaction force mechanism, which generates reaction force against depression by the driver. A position of the dummy clutch pedal when no pressing force is applied is a start position of the dummy clutch pedal, and a position of the dummy clutch pedal when the dummy clutch pedal is fully depressed is an end position of the dummy clutch pedal. The driver can operate the dummy clutch pedal from the start position to the end position against the reaction force from the reaction force mechanism.

Alternatively, the dummy clutch operation device 25 may be a lever type operating device or a dial type operating device which is operated by a hand. The driver can also operate the dummy clutch operation device 25 which is lever type or dial type against the reaction force from the start position to the end position and can feel the operation feeling as if operating the clutch pedal installed in the conventional transmission vehicle.

A clutch sensor 15 is installed in the dummy clutch operation device 25. The clutch sensor 15 outputs a signal indicating an operation amount of the dummy clutch operation device 25. Operation of the dummy clutch operation device 25 by the driver is continuous operation, and the signal indicating the operation amount is continuously transmitted to the control device 101 while the electric vehicle 100 is traveling or stopped. When the dummy clutch operation device 25 is the dummy clutch pedal, a depression amount of the pedal is acquired as the operation amount of the dummy clutch operation device 25. However, since the electric vehicle 100 does not include an actual clutch, the operation amount of the dummy clutch operation device 25, that is, the colutch operation amount is a virtual clutch operation amount.

The electric vehicle 100 includes a human-machine interface (HMI) 20 as an interface with a driver, an in-vehicle speaker 21, and a display device 26. The HMI 20 includes a touch panel display. The HMI 20 displays information on the touch panel display and receives input by touch operation on the touch panel display by the driver. The in-vehicle speaker 21 provides information to the driver by voice and can output virtual engine sound described later. The display device 26 can display a virtual rotational speed of a virtual engine (hereinafter referred to as a virtual engine speed) described later.

The electric vehicle 100 includes a control device 101. Sensors and devices to be controlled which are mounted on the electric vehicle 100 are connected to the control device 101 via an in-vehicle network. Various sensors in addition to the vehicle speed sensor 11, the accelerator pedal stroke sensor 12, the brake pedal stroke sensor 13, the shift switch 14, and the clutch sensor 15 are mounted on the electric vehicle 100.

The control device 101 is typically an electronic control unit (ECU). The control device 101 may be a combination of a plurality of ECUs. The control device 101 includes at least a processor 102 and a memory 103. The memory 103 includes a RAM which temporarily stores data, and a ROM which stores a program 104 executable by the processor 102 and various data 105 related to the program. The program 104 is composed of a plurality of instructions. The processor 102 reads the program 104 and the data 105 from the memory 103 and executes the program and the data to generate a control signal based on a signal acquired from each sensor. The number of processors 102 included in the control device 101 may be one or may be plural.

The control device 101 can control the electric vehicle 100 in various control modes. The driver can select the control mode by touching and operating the touch panel display of the HMI 20. Specifically, when touch operation on the touch panel display of the HMI 20 is performed, one or more programs 104 associated with each touch operation are read from the memory 103 and executed by the processor 102. Hereinafter, the control mode of the electric vehicle 100 by the control device 101, which can be selected by the driver by operating the HMI 20, will be described.

### 3. Control Mode of Electric Vehicle

The control modes of the electric vehicle 100 selectable by the control device 101 include at least the EV mode and the MT mode. The driver can select the control mode from a selection menu displayed on the touch panel display of the HMI 20.

If the EV mode is selected, the control mode of the electric vehicle 100 is switched to the EV mode. The EV mode is a mode in which the vehicle travels by controlling the electric motor with normal torque characteristics. In the EV mode, the gear shift operation of the relative direction type shift device 24 and the clutch operation of the dummy clutch operation device 25 are invalidated. In the EV mode, the driver can basically drive the electric vehicle 100 only by operating the accelerator pedal 22, the brake pedal 23, and the steering wheel 27.

If the MT mode is selected, the control mode of the electric vehicle 100 is switched to the MT mode. The MT mode is a control mode for operating the electric vehicle 100 like the transmission vehicle. In the MT mode, operations of the relative direction type shift device 24 and the dummy clutch operation device 25 are enabled, and the operation when a manual transmission type gear ratio is switched is reproduced by the gear shift operation of the relative direction type shift device 24.

The driver may be able to select options regarding engine characteristics, engine sound, drive mode, suspension characteristics, the number of shift positions, and the like. By appropriately combining these options, the driver can determine the characteristics of the transmission vehicle that the driver wants the electric vehicle 100 to simulate. In this way, the control mode of the electric vehicle 100 can be switched to the driver's preference by operating the touch panel display of the HMI 20.

The electric vehicle 100 may include a mode change switch for switching between the EV mode and the MT mode. The driver may be able to switch between the EV mode and the MT mode by pressing the mode change switch instead of operating a display screen of the touch panel display.

Such a control mode switched by the driver is related to travel control of the electric vehicle 100. In the next chapter, the travel control of the electric vehicle 100 by the control device 101 will be described.

### 4. Travel Control of Electric Vehicle

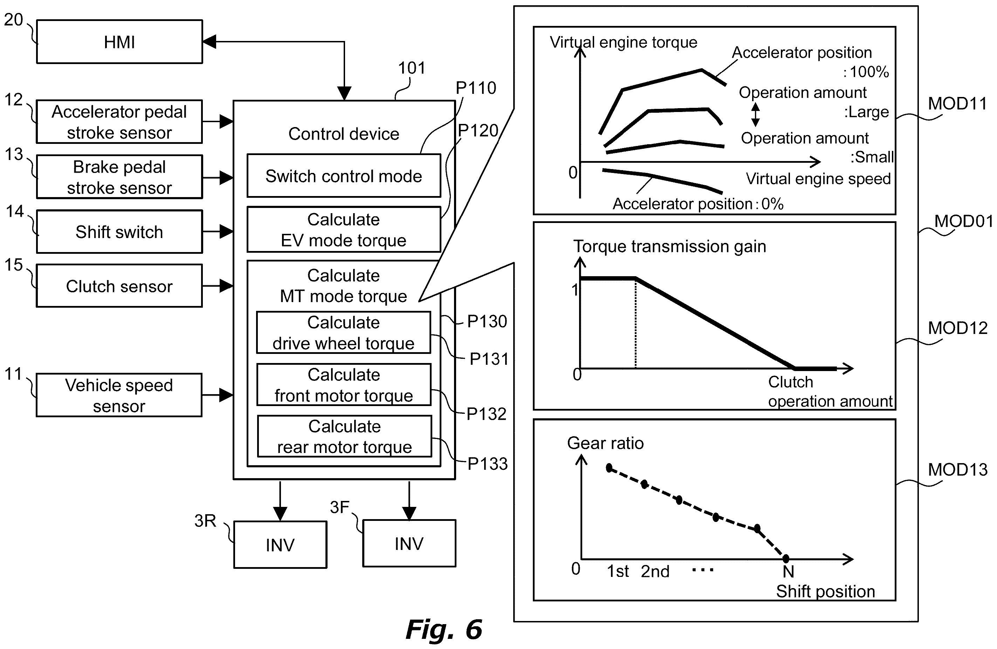

Fig. 6 is a diagram showing a configuration of the control device 101 related to the travel control of the electric vehicle 100. More specifically, Fig. 6 shows a configuration particularly related to torque control in the travel control. The processor 102 functions as a travel control device by the processor 102 executing one or more programs 104 for the travel control stored in the memory 103.

A control mode signal is input from the HMI 20 to the control device 101 as a travel control device. The control mode signal includes information on the control mode selected by the driver. The control device 101 executes a process P110 based on the control mode signal. In the process P110, the control mode is switched according to the control mode signal. Switching the control mode between the EV mode and the MT mode particularly affects the travel control in the switching of the control mode.

If the control mode is switched to the EV mode, the control device 101 executes a process P120 for calculating the torque in the EV mode. In the process P120, the control device 101 acquires the vehicle speed from the signal of the vehicle speed sensor 11 and acquires the accelerator position from the signal of the accelerator pedal stroke sensor 12. The control device 101 has a motor torque map with the accelerator position and the vehicle speed as parameters. The control device 101 inputs the vehicle speed and the accelerator position to the motor torque map and controls the inverters 4F and 4R such that the electric motors 3F and 3R generate the torque obtained from the motor torque map.

If the control mode is switched to the MT mode, the control device 101 executes a process P130 for calculaing the torque in the MT mode. The process P130 includes a process P131 for calculating torque to be generated at the drive wheel. The process P130 also includes a process P132 and a process P133. The process P132 is a process for calculating torque to be generated in the front electric motor 4F, and the process P133 is a process for calculating torque to be generated in the rear electric motor 4R. The process P130 and the process P133 are executed according to the driving wheel torque calculated in the process P130 and torque distribution between the front wheels 6F and the rear wheels 6R.

The vehicle model MOD01 is used for calculating of the drive wheel torque in the process P130. The vehicle model MOD01 includes an engine model MOD11, a clutch model MOD12, and a transmission model MOD13. An engine, a clutch, and a transmission virtually realized by the vehicle model MOD01 are referred to as a virtual engine, a virtual clutch, and a virtual transmission, respectively. In the engine model MOD11, the virtual engine is modeled. In the clutch model MOD12, the virtual clutch is modeled. In the transmission model MOD13, the virtual transmission is modeled.

The engine model MOD11 calculates a virtual engine speed and virtual engine torque. The virtual engine speed is calculated from the vehicle speed, a total reduction ratio, and a slip ratio of the virtual clutch. The virtual engine torque is calculated from the virtual engine speed and the accelerator position. The vehicle speed is acquired from the signal of the vehicle speed sensor 11. The accelerator position is acquired from the signal of the accelerator pedal stroke sensor 12. The total reduction ratio is a value obtained by multiplying the gear ratio of the virtual transmission by a reduction ratio determined by a mechanical structure from the virtual transmission to the drive wheels. In the engine model MOD11, the relationship between the virtual engine speed and the virtual engine torque is defined for each accelerator position. The engine characteristics of the engine model MOD11 may be selected by the driver operating the HMI 20.

The clutch model MOD12 calculates a torque transmission gain. The torque transmission gain is a gain for calculating a degree of torque transmission of the virtual clutch according to the clutch operation amount. The clutch operation amount is acquired from the signal of the clutch sensor 15. If the dummy clutch operation device 25 is the dummy clutch pedal, the clutch operation amount is 0% at the start position of the dummy clutch pedal 25 and is 100% at the end position of the dummy clutch pedal 25. In the clutch model MOD12, the torque transmission gain is given according to the clutch operation amount. The torque transmission gain is converted into a clutch torque capacity of the virtual clutch, that is, the virtual clutch torque capacity. Then, the virtual clutch torque input from the virtual clutch to the virtual transmission is calculated based on a comparison between the virtual clutch torque capacity and the virtual engine torque calculated in the engine model MOD11. In the clutch model MOD12, a value obtained by subtracting the torque transmission gain from 1 is calculated as a slip ratio. The slip ratio is used to calculate the virtual engine speed in the engine model MOD11.

The transmission model MOD13 calculates a virtual gear ratio. The virtual gear ratio is a gear ratio determined by the virtual shift position in the virtual transmission. The virtual gear ratio is set for each shift position. The maximum virtual gear ratio is set for the first position, and the virtual gear ratio is reduced in the order of the second position, the third position, the fourth position, and so on. The shift position is shifted up by one stage in response to the upshift signal from the shift switch 14, and the shift position is shifted down by one stage in response to the downshift signal from the shift switch 14. At this time, the control device 101 accepts input from the shift switch 14 only when the operation amount of the dummy clutch operation device 25, that is, the clutch operation amount, is equal to or larger than a predetermined amount. If the clutch operation amount is less than the predetermined amount, the input from the shift switch 14 is invalidated and even if the relative direction type shift device 24 is operated, up-shifting or down-shifting is not performed.

There is no physical limitation on the number of the shift positions directed by the relative direction type shift device 24. Therefore, the number of the shift positions may be variable, and a different transmission model MOD 13 may be used according to the number of shift positions.

The transmission model MOD13 calculates a virtual transmission torque using the virtual gear ratio and the virtual clutch torque. The virtual transmission torque is a virtual torque output from the virtual transmission. The control device 101 controls the inverters 3F and 3R so as to change the torque output from the electric motors 4F and 4R in accordance with the virtual transmission torque. The virtual transmission torque changes discontinuously in accordance with the switching of the virtual gear ratio. This discontinuous change in the virtual transmission torque causes a torque shock in the electric vehicle 100, and the electric vehicle 100 is made to look like a vehicle having a stepped transmission.

The vehicle model MOD01 calculates the drive wheel torque from the virtual transmission torque and the reduction ratio. The drive wheel torque is a total amount of torque applied to the right and left front wheels 6F and the right and left rear wheels 6R. The torque distribution to the front wheels 6F and the rear wheels 6R can be fixed or can be changed actively or passively. For example, the driver may be able to select a four wheel drive mode, in which the four wheels are driven, or a rear-wheel drive mode, in which only the rear wheels are driven.

In the process P132, the torque of the front electric motor 4F (front motor torque) in the MT mode is calculated by multiplying the drive wheel torque calculated in the process P131 by the torque distribution ratio to the front wheel 6F and the reduction ratio from an output-shaft of the front electric motor 4F to the front wheels 6F. The control device 101 controls the front inverter 3F such that the front electric motor 4F generates the front motor torque calculated in the process P132.

In the process P133, the torque of the rear electric motor 4R (rear motor torque) in the MT mode is calculated by multiplying the drive wheel torque calculated in the process P131 by the torque distribution ratio to the rear wheels 6R and the reduction ratio from an output shaft of the rear electric motor 4R to the rear wheels 6R. The control device 101 controls the rear inverter 3R such that the rear electric motor 4R generates the rear motor torque calculated in the process P133.

The vehicle model MOD01 is predetermined and stored in the memory 103. Considering the motor torque of the electric motors 4F and 4R calculated in the process P130 by the vehicle model MOD01, when the clutch operation amount is 0%, the motor torque with respect to the vehicle speed and the accelerator position under a certain virtual shift position is constant. Hereinafter, the motor torque determined by the virtual shift position, the vehicle speed, and the accelerator position is referred to as base torque of the electric motors 4F and 4R. As the clutch operation amount increases, the motor torque is reduced from the base torque, and the mortor torque is set to zero when the clutch operation amount exceeds a predetermined operation amount. When the virtual shift position is switched, the relationship of the base torque with the vehicle speed and the accelerator position is switched accordingly.

### 5. Sound Control of Electric Vehicle

The control device 101 may also perform sound control for controlling the sound emitted by the in-vehicle speaker 21. The processor 102 functions as a sound control device by the processor 102 executing one or more programs 104 for the sound control stored in the memory 103. The processor 102 which functions as the torque control device and the processor 102 which functions as the sound control device may be separate processors or the same processor.

The control device 101 as the sound control device can generate artificially generated sound from the in-vehicle speaker 21. One kind of the artificial sound is virtual engine sound simulating engine sound in a conventional internal combustion engine vehicle. When the control mode signal indicating that the MT mode is selected is input from the HMI 20, the control device 101 as the sound control device generates the virtual engine sound based on the virtual engine torque and the virtual engine speed calculated in the process P131.

If the driver can select the engine sound, the engine sound selected in the HMI 20 is used as a sound source of the virtual engine sound generated from the in-vehicle speaker 21. However, the sound of the sound source is not used as it is. A sound pressure of the engine sound is calculated such that the sound pressure increases as the virtual engine torque increases, and a frequency of the engine sound is calculated such that the frequency increases as the virtual engine speed increases. Then, for example, the sound pressure of the sound source is changed by an amplifier, and the frequency of the sound source is changed by the frequency modulator, and the virtual engine sound is reproduced from the in-vehicle speaker 21. The virtual engine torque and the virtual engine speed change according to the accelerator operation, the gear shift operation, and the clutch operation by the driver. By changing the sound pressure and frequency of the virtual engine sound in accordance with the virtual engine torque and the virtual engine speed, which change in accordance with the operation by the driver, the driver can be given a sense of reality as if he or she were driving a real transmission vehicle.

### 6. Other Embodiments of Dummy Clutch Operating Device

The dummy clutch operation device 25 may be a device for switching ON / OFF of the clutch. For example, the dummy clutch operation device 25 may be a switch, and the clutch may be turned off (the clutch operation amount is 100%) by turning on the switch, and the clutch may be turned on (the clutch operation amount is 0%) by turning off the switch. Alternatively, even in a case where the dummy clutch operation device 25 is a pedal type operating device operated by a foot, the dummy clutch operation device 25 may not necessarily be a device for inputting a continuous operation amount, and the clutch may be turned off when the driver steps on the pedal and the clutch may be turned on when the driver releases the foot from the pedal. In this case, operation input by the driver to the dummy clutch operation device 25 is discrete operation, and the clutch sensor 15 discretely outputs a signal indicating ON or OFF of the clutch every time the operation by the driver is performed.

In a case where the dummy clutch operation device 25 is such device for switching the clutch between ON and OFF, the torque transmission gain input to the vehicle model MOD12 shown in Fig. 6 is 1 when the clutch is ON, and is 0 when the clutch is OFF. The control device 101 accepts input from the relative direction type shift device 24 when the clutch is ON, and invalidates the input when the clutch is OFF.

### 7. Gear Shift Operation Using Relative Direction Type Shift Device and Dummy Clutch Operation Device

As described above, the driver of the electric vehicle 100 can experience the operation of the transmission vehicle in the electric vehicle 100 by operating the HMI 20 to switch the control mode to the MT mode. As one kind of operations simulating the transmission vehicle, in the MT mode, the driver can manually perform a virtual gear shift operation (shift change) to switch the virtual shift position.

The gear shift operation in the electric vehicle 100 is performed by the relative direction type shift device 24. Further, the driver needs to perform the clutch operation of the dummy clutch operation device 25 by himself / herself in addition to the gear shift operation by the relative direction type shift device 24. Since the driver performs the clutch operation by himself / herself using the dummy clutch operation device 25, and thus the operation feeling becomes closer to that of the actual transmission vehicle, it is pleasant for the driver who wants to enjoy driving as of the transmission vehicle.

Further, since the dummy clutch operation device 25 is installed, the dummy clutch operation device 25 can be used for operation other than the gear shift operation. For example, the driver can generate a virtual neutral state by operating the dummy clutch operation device 25. Thus, a behavior closer to a behavior of the transmission vehicle can be reproduced, and the driver can get more options of how to enjoy driving.

The following effects are obtained by performing the gear shift operation by the relative direction type shift device 24. For comparison, a case where a device used for gear shift operation is a device simulating an H-type shifter of the transmission vehicle is considered. In the H-type shifter, the shift position is absolutely designated by a position of a lever. However, since the driver cannot operate the shift lever while looking at the driver's hand during driving, the driver may erroneously shift the shift lever to a wrong shift position. In contrast, in the case of the relative direction type shift device 24, the virtual shift position is changed one stage at a time by the operation of the driver. Since the shift position is changed stepwise and one stage at a time, the shift position several stages higher or lower is not selected by mistake. Therefore, the driver can easily perform the gear shiht operation.

The relative direction type shift device 24 is more effective when provided at the steering wheel 27 or the steering column. The driver holds the steering wheel 27 while driving the electric vehicle 100, so when the relative direction type shift device 24 is provided at the steering wheel 27 or the steering column, the driver can operate the relative direction type shift device 24 without taking one hand off the steering wheel 27. Therefore, a force for holding the steering wheel can be stabilized, and thus stable traveling is enabled. Further, since the time for releasing the hand from the steering wheel 27 is not required, the gear shift operation can be performed quickly.

Further, it is more effective that the relative direction type shift device 24 installed at the steering wheel is a device in which a paddle or a button corresponding to upshift and a paddle or a button corresponding to downshift are provided separately on the right side and the left side as in the example shown in Figs. 2a, 2b or 3. In this case, it is easy to understand which one of the paddles or the buttons corresponds to the upshift and which one of the paddles or the buttons corresponds to the downshift without looking at his / her hand, and thus it is possible to suppress erroneous operation by the driver.

### 8. Control of Virtual Engine Speed

The control device 101 accepts the gear shift operation input to the relative direction type shift device 24 when a condition that an operation amount equal to or larger than a predetermined amount is input to the dummy clutch operation device 25 is satisfied. Other conditions may be set in order for the control device 101 to accept the gear shift operation. Here, a case where a condition related to the virtual engine speed is set is described.

Specifically, an appropriate range is set in advance for the virtual engine speed. When the driver performs the gear shift operation, the control device 101 predicts the virtual engine speed assuming that the virtual shift position is switched in response to the gear shift operation. Then, if it is predicted that the virtual engine speed after the shift position is changed is out of the appropriate range, the control device 101 does not accept the gear shift operation. The virtual engine speed after the shift positon is changed can be predicted from the current speed based on the vehicle model MOD01. An upper limit of the range of the appropriate engine speed is set to be a lower limit of the engine speed at which over-revolution occurs, and a lower limit of the range of the appropriate engine speed is set to be an upper limit of the engine speed at which under-revolution occurs. Although the electric vehicle 100 does not actually have an engine, in which the over-revolution or the under-revolution occurs, the upper limit and the lower limit of the engine speed are set based on the engine characteristics of the simulated transmission vehicle. If the driver can select the engine characteristics using the HMI 20, the upper limit and the lower limit of the engine speed may be set for each engine characteristic. In this way, by preventing the virtual engine from being in the over-revolution or under-revlotuion, the behavior of the electric vehicle 100 can be made closer to that of the transmission vehicle, and the driver's satisfaction can be increased.

The control device 101 may have a function corresponding to an automatic blipping function of the transmission vehicle. That is, if the downshift is performed, the virtual engine speed may be automatically increased in accordance with the vehicle speed. Thus, the virtual engine speed can be naturally changed, and the behavior of the electric vehicle 100 can be made closer to that of the transmission vehicle.

### 9. Time Chart

### 9-1. Example of Time Chart of Upshift

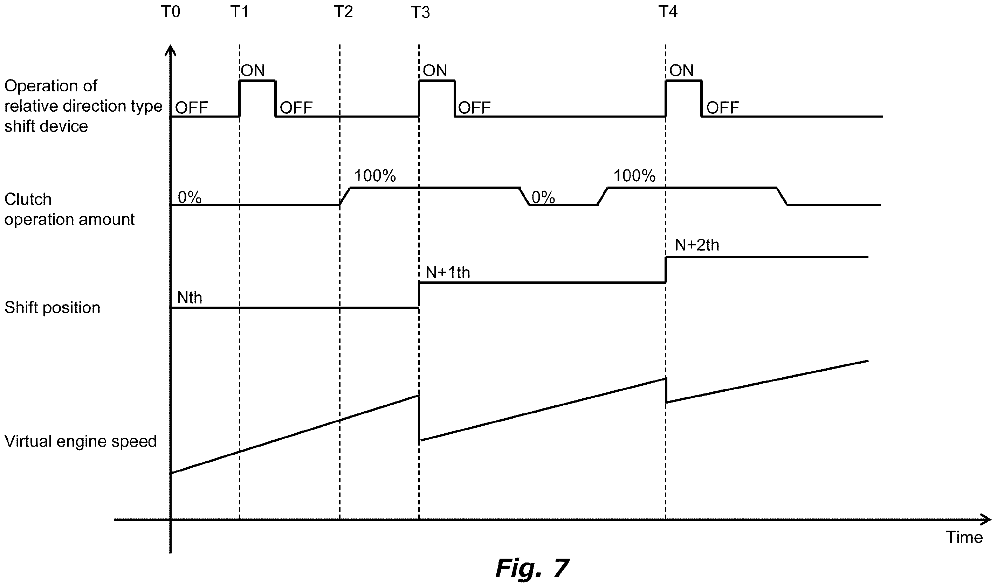

Fig. 7 is a time chart showing an example of a case where the upshift is performed. Here, an example in a case where the relative direction type shift device 24 is the dummy paddle shifter and the dummy clutch operation device 25 is the dummy clutch pedal is described. However, the same can be applied to a case where the relative direction type shift device 24 is other device and the dummy clutch operation device 25 is other device. In addition, here, the threshold value of the clutch operation amount for accepting the input from the relative direction type shift device 24 is set to 70%. However, the threshold value of the clutch operation amount is not limited to 70% and can be arbitrarily set.

At time T0 when the time chart starts, the shift position is set to the N stage. At time T1, the driver operates the paddle on the upshift side of the relative direction type shift device 24. However, at this time, the operation amount is not input to the dummy clutch pedal, and the clutch operation amount is 0%. Therefore, the control device 101 does not accept the upshift direction from the shift switch 14, and the virtual shift position is not changed.

At time T2, the driver depresses the dummy clutch pedal, and the clutch operation amount becomes 100%. Since the clutch operation amount exceeding the threshold value is input, the control device 101 is brought into a state where the control device 101 can accept the input from the relative direction type shift device 24. In this state, the driver operates the paddle on the upshift side at time T3. Then, the control device 101 accepts the upshift signal input from the shift switch 14, and the upshift is performed.

Thereafter, the driver re-depresses the dummy clutch pedal, and at time T4, the paddle on the upshift side of the relative direction type shift device 24 is operated again in a state in which the clutch operation amount is 100%. Since the operation amount larger than the threshold value, the control device 101 receives the upshift signal, and the virtual shift position is shifted up by one stage, as at the time T3.

In the example of Fig. 7, the input of the upshift signal is accpeted and the virtual shift position is switched at the time when the switch is pressed, not at the time when the switch that has been pressed once returns. In this way, by setting the timing of switching the virtual shift position to the time point at which the switch is pressed, it is possible to reduce the sense of discomfort for the driver and to make the operation easy.

### 9-2. Example of Time Chart of Downshift

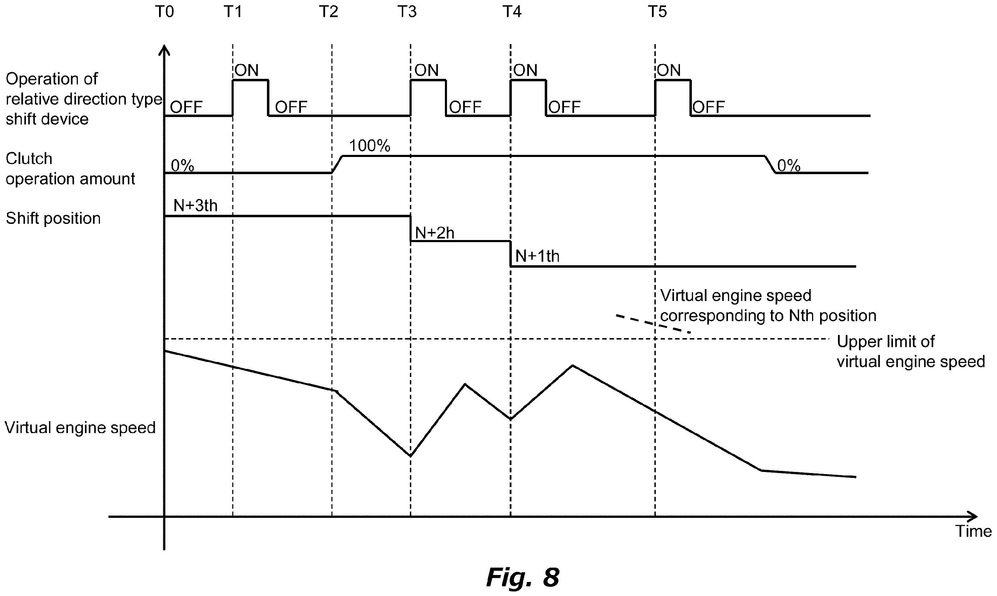

Fig. 8 is a time chart showing an example of downshift. Similarly to Fig. 7, an example in a case where the relative direction type shift device 24 is the dummy paddle shifter, the dummy clutch operation device 25 is the dummy clutch pedal, and the threshold value of the clutch operation amount for receiving the input from the relative direction type shift device 24 is 70% is described. The operation at the time of downshift is basically the same as that at the time of upshift.

At time T0 when the time chart starts, the shift position is set to the N + 3th position. At time T1, the driver operates the paddle on the downshift side of the relative direction type shift device 24. However, at this time, the operation amount is not input to the dummy clutch pedal. Therefore, the control device 101 does not accpet the downshift direction from the shift switch 14, and the virtual shift position is not changed.

At time T2, the driver depresses the dummy clutch pedal, and the clutch operation amount becomes 100%. Since the clutch operation amount exceeding the threshold value is input, the control device 101 is brought into a state where the control device 101 can accept the input from the relative direction type shift device 24. In this state, the driver operates the paddles on the downshift side at time T3. Then, the control device 101 accpets the downshift signal input from the shift switch 14, and the virtual shift position is shifted down by one stage. The reason why the virtual engine speed temporarily increases after the time T3 is that the automatic blipping function is activated. This is the control described in chapter 8.

At time T4, the paddle on the downshift side of the relative direction type shift device 24 is operated again while the driver continues to depress the dummy clutch pedal. Since the operation amount larger than the threshold value is input to the dummy clutch pedal, the control device 101 accpets the downshift signal, and the virtual shift position is further shifted down by one stage. In addition, the automatic blipping function is activated, and the virtual engine speed temporarily increases after the downshift. The virtual engine speed changes in the same manner when the driver depresses the accelerator pedal 22. That is, when the accelerator pedal 22 is depressed in a state where the clutch operation amount is 100%, the virtual engine speed displayed on the display device 26 increases.

As in the example of Fig. 8, the control device 101 may permit multiple shift change while the driver is depressing the dummy clutch pedal. That is, when the operation of the relative direction type shift device 24 is performed a plurality of times in a state where the dummy clutch pedal is continuously depressed, all of the plurality of times of operation may be accepted, and the virtual shift position may be shifted down by a plurality of stages. Therefore, the need for the driver to re-depress the dummy clutch pedal is eliminated, and thus quick gear shift operation is enabled.

At time T5, the paddle on the downshift side is operated again in a state where the dummy clutch pedal is depressed. At this time, the condition for accepting the shift change is satisfied with respect to the operation amount of the dummy clutch operation device 25. However, the control device 101 does not accept the gear shift operation because the virtual engine speed does not satisfy the predetermined condition. Specifically, the virtual engine speed assuming that the shift change is accepted exceeds the upper limit of the appropriate range set in advance, and therefore, the shift change direction is not accepted. This is an example of the condition regarding the virtual engine speed described in Chapter 8.

## Claims

1. An electric vehicle (100) having an electric motor (4F, 4R) as a drive source, comprising:
a control device (101) configured to control the electric motor (4F, 4R);
a first indicator that gives a continuous direction to the control device (101) in accordance with a first operation amount of the first indicator;
a second indicator that gives a relative direction to the control device (101) for each operation of the second indicator; and
a third indicator that gives a continuous or discrete direction to the control device (101) in accordance with a third operation amount of the third indicator,
wherein the control device (101) is configured to execute:
switching a relationship among base torque, the first operation amount, and a vehicle speed of the electric vehicle (100), in a plurality of predetermined relationships in accordance with operation of the second indicator, the base torque being torque of the electric motor in a state where the third indicator is not operated;
decreasing the torque of the electric motor (4F, 4R) from the base torque in response to a direction from the third indicator; and
accepting input from the second indicator only when the third operation amount is larger than a predetermined amount.

2. The electric vehicle (100) according to claim 1, wherein the second indicator is installed at a steering wheel (27) or a steering column of the electric vehicle (100).

3. The electric vehicle (100) according to claim 2, wherein the second indicator is a dummy paddle shifter that simulates a paddle shifter of a manual transmission.

4. The electric vehicle (100) according to any one of claims 1 to 3, wherein
the electric vehicle (100) further comprises a vehicle speed sensor configured to measure the vehicle speed,
the control device (101) comprises a storage device configured to store a range of an appropriate vehicle speed determined for each of the plurality of predetermined relationships, and
the control device (101) is further configured to execute:
determining whether the vehicle speed is within the range of the appropriate vehicle speed determined for a relationship among the base torque after switching, the first operation amount, and the vehicle speed when the second indicator and the third indicator are operated; and
not accepting operation of the second indicator if the vehicle speed is not within the range of the appropriate vehicle speed determined for the relationship among the base torque after switching, the first operation amount, and the vehicle speed.

5. The electric vehicle (100) according to any one of claims 1 to 4 further comprising a display device configured to display a virtual engine speed, wherein
the control device (101) is further configured to associate the first operation amount with display of the virtual engine speed when the first indicator is operated in a state where the third operation amount is a maximum amount.

6. The electric vehicle (100) according to any one of claims 1 to 5, wherein the first indicator is an accelerator pedal (22).

7. The electric vehicle (100) according to claim 6, wherein the plurality of predetermined relationships is determined in advance so as to reproduce a relationship between an operation amount of an accelerator pedal (22) and engine torque in each of a plurality of gear ratios of a transmission vehicle.

8. The electric vehicle (100) according to any one of claims 1 to 7, wherein the control device (101) is further configured to execute:
switching between a first mode and a second mode in accordance with selection by a driver of the electric vehicle (100), the first mode being a mode in which operation of the second indicator and the third indicator are invalidated, the second mode being a mode in which operation of the second indicator and the third indicator are enabled; and
selecting a relationship among the base torque, the first operation amount, and the vehicle speed from the plurality of predetermined relationships in accordance with the vehicle speed when the first mode is switched to the second mode.
